Europäisches Patentamt

European Patent Office

Office européen des brevets

(19)

(11) **EP 1 646 231 A1**

(12) **EUROPEAN PATENT APPLICATION**

(43) Date of publication:
**12.04.2006 Bulletin 2006/15**

(51) Int Cl.:
*H04N 5/74* (2006.01)    *G03B 21/10* (2006.01)

(21) Application number: **05108974.6**

(22) Date of filing: **28.09.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **05.10.2004 KR 2004079244**

(71) Applicant: **Samsung Electronics Co, Ltd Suwon-si, Gyeonggi-do 442-742 (KR)**

(72) Inventors:
• **Yoon, Seok-il**
  **Daejeon Metropolitan-City (KR)**

• **Kim, Sung-gi**
  **Suwon-si**
  **Gyeonggi-do (KR)**
• **Kah, Young-il**
  **Suwon-si**
  **Gyeonggi-do (KR)**

(74) Representative: **Read, Matthew Charles et al Venner Shipley LLP**
  **20 Little Britain**
  **London EC1A 7DH (GB)**

(54) **Image projector**

(57)    A rear projector includes a cathode ray tube (CRT) 31 to scan light and generate an image, a projection lens unit 35 to magnify and project the image generated by the CRT 31, a screen 50 on which the projected image is formed, and a reflection optical system 40 interposed between the projection lens unit 35 and the screen to change a path of projected light. The CRT 31 and the reflection optical system 40 are arranged such that a raster direction b of the cathode ray tube and a direction a along which the image is formed on the screen 50 are parallel or substantially parallel to each other. The rear projector can thus be made slim and compact and can prevent reversal of the projected image.

FIG. 4

EP 1 646 231 A1

**Description**

The invention relates to an image projector and, more particularly, a rear projector.

Generally, projectors display images by projecting an image generated by an image forming unit onto a screen. Projectors are classified as front projectors or rear projectors according to the method used to magnify and project the image. When using a rear projector, all of the components thereof, including the screen, can be located in a cabinet, or housing. Rear projectors are thus suitable for use in equipment such as home projection televisions and the like.

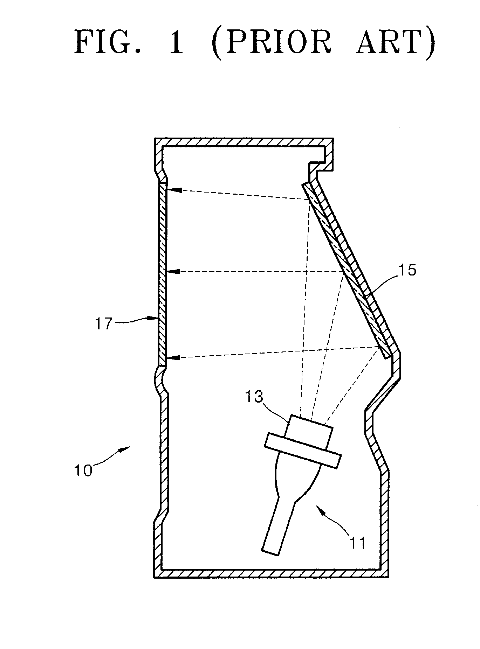

Referring to Figure 1, a conventional rear projector includes a housing 10, a cold cathode ray tube (CRT) 11 installed in the housing 10 for generating an image, a projection lens unit 13 for magnifying and projecting an incident image and a reflecting mirror 15 for reflecting the projected image onto a screen 17. The screen 17 is installed on a front surface of the housing 10 and allows an image projected from the rear of the screen 17 to be formed thereon, such that the image formed on the screen 17 can be viewed from outside the housing 10, within a predetermined wide viewing angle. The projection lens unit 13 magnifies and projects the image emitted by the cold CRT 11 to the reflecting mirror 15. The reflecting mirror 15 is installed inside the housing 10 to face the screen 17 at an angle. The reflecting mirror 15 reflects the incident image onto the screen 17.

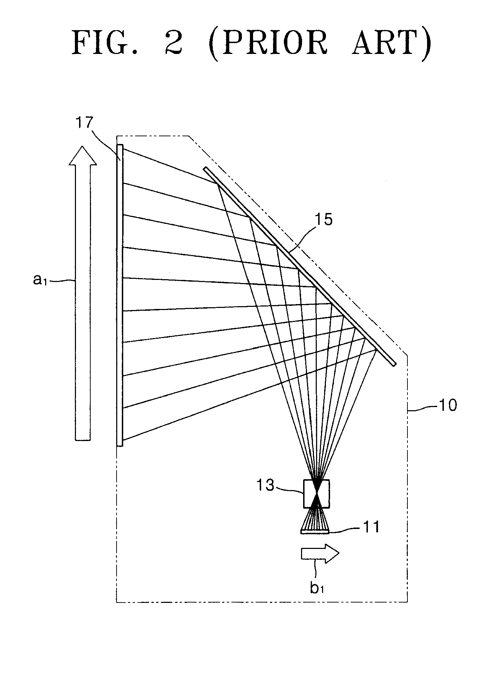

The optical arrangement of the conventional rear projector of Figure 1 will be described with reference to Figure 2. Referring to Figure 2, the rear projector is arranged so that the angle between a raster direction $b_1$ of the cold CRT 11 and a direction $a_1$ along which the image is formed on the screen 17 is approximately 90°, where a raster is a set of scan lines of the cold CRT 11, which are used to form the image.. The angle between the directions $a_1$ and $b_1$ may be varied within a range of 90° $\pm$ 45°, depending on the angle at which the reflecting mirror 15 is positioned.

Since a reflecting mirror 15 is used to bend the optical path of light emitted by the cold CRT 11, and the cold CRT 11 is disposed at a lower side of the housing 10, the rear projector can be made slim. However, since there is an angle of approximately 90° between the raster direction $b_1$ and the image direction $a_1$, the height of the housing 10, must exceed the combined height of the screen 17 and the cold CRT 11.

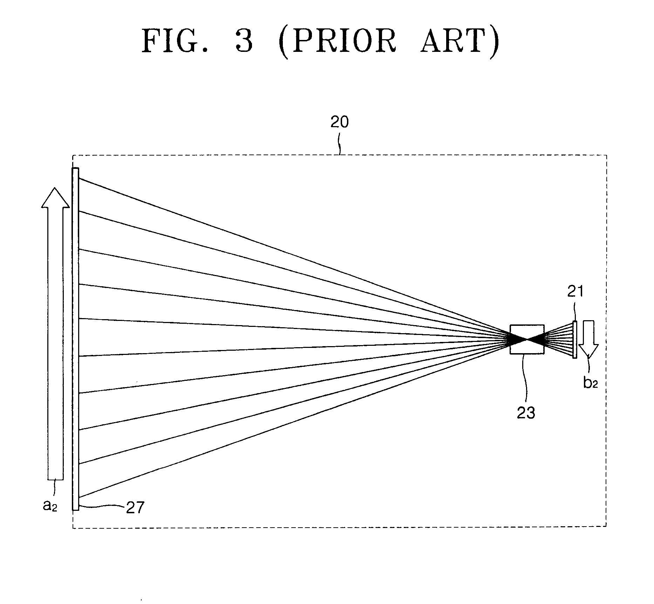

Figure 3 is a schematic view illustrating an optical arrangement of another conventional rear projector, which does not include a reflecting mirror. In this arrangement, a cold CRT 21, a projection lens unit 23, and a screen 27 are aligned inside a housing 20. The angle between the raster direction $b_2$ of the cold CRT 21 and the direction $a_2$ along which an image is formed on the screen 27 is 180°.

Since the housing 20 needs only to accommodate the height of the screen 27, and not the height of the cold CRT 21, the height of the rear projector of Figure 3 is less than that of the rear projector of Figures 1 and 2. However, since the cold CRT 21 is disposed behind the screen 27, the overall thickness of the rear projector is increased. Furthermore, image reversal may occur when the raster direction $b_2$ and the direction $a_2$ along which the image is formed on the screen 27 are reversed.

One object of the invention is the provision of a rear projector, which can be made slim and compact by optimizing the height and thickness of its housing, in which image reversal can be prevented.

According to an aspect of the invention, a rear projector comprises a cathode ray tube to scan light and generate an image, a projection lens unit to magnify and project the image generated by the cathode ray tube, a screen on which the projected image is formed, and a reflection optical system interposed between the projection lens unit and the screen to change a path of projected light, wherein the cathode ray tube and the reflection optical system are arranged such that a raster direction of the cathode ray tube and a direction along which the image is formed on the screen are parallel or substantially parallel to each other.

Embodiments of the invention will now be described with reference to the accompanying drawings, of which:

Figure 1 is a schematic sectional view illustrating a conventional rear projector;
Figure 2 is a schematic view illustrating the optical arrangement of the conventional rear projector of Figure 1;
Figure 3 is a schematic view illustrating the optical arrangement of another conventional rear projector;
Figure 4 is a schematic sectional view illustrating a rear projector according to an embodiment of the present general inventive concept; and
Figure 5 is a schematic view illustrating the optical arrangement of the rear projector of Figure 4.

In the following, embodiments of the invention will be described, examples of which are illustrated in the accompanying drawings, wherein like reference numerals refer to the like elements throughout.

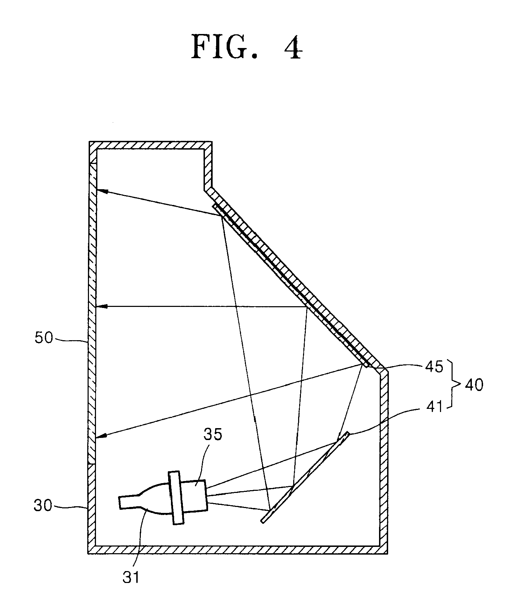

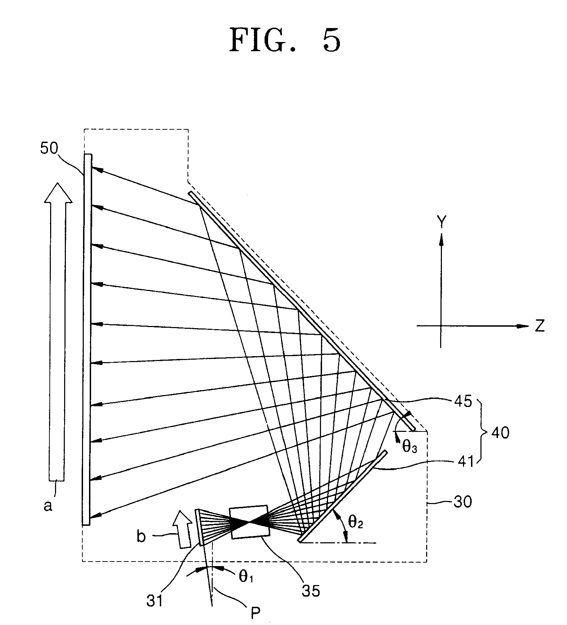

Referring to Figures 4 and 5, a rear projector according to an embodiment of the invention is structured such that all components thereof are installed inside a housing, or cabinet, 30. The rear projector includes a cathode ray tube (CRT) 31 to scan light and generate an image, a projection lens unit 35 to magnify and project the image generated by the CRT 31, a screen 50, on which the magnified and projected image is formed, and a reflection optical system 40 interposed between the projection lens unit 35 and the screen 50 to change the path of the projected light. For illustration purposes only, a light-emitting surface of the CRT 31 is illustrated in Figure 5.

The screen 50 is installed on a front surface of the housing 30, and allows an image projected from a rear side thereof to be formed thereon along a direction indicated by arrow "a," such that the image is viewable at a predetermined wide viewing angle. The screen 50 may include a combination of a lenticular lens having a predetermined gain, for example, a gain of about 4.5, and a Fresnel lens having a predetermined focal length, for example, a focal length of about 670 mm. Since the configuration of the screen 50 should be known to those skilled in the art, a detailed explanation thereof is omitted.

The CRT 31 scans an electron beam to generate an image and emits it to the projection lens unit 35. A raster is composed of scan lines of the CRT 31, which are used to form the image. In this embodiment, the raster direction is a vertical or substantially vertical direction indicated by arrow "b" of Figure 5.

The CRT 31 may be a cold CRT. In this case, a coupler, not shown, filled with a coolant to reduce heat generated in the cold CRT, and a lens system, not shown, configured to adjust an angle at which the image is emitted, can be provided on a front surface of the cold CRT.

The CRT 31 is arranged in the housing 30 so that the direction "a" along which the image is formed on the screen 50 and the raster direction "b" of the CRT 31 are parallel, or substantially parallel, to each other. Here, the directions "a" and "b" are considered to be substantially parallel to each other when an angle $\theta_1$ between the direction "a" and the raster direction "b" of the CRT 31 falls within a range of 0 to 5° and the directions "a" and "b" are considered to be parallel to each other when the angle $\theta_1$ is 0°. For illustration purposes, Figure 5 includes a virtual surface P, parallel to the image formed on the screen 50, located at a raster point of the CRT 31. The angle $\theta_1$ is shown as the angle between the raster direction "b" and the virtual surface P.

The projection lens unit 35 is disposed in the optical path between the CRT 31 and the reflection optical system 40 and is arranged to magnify and project an incident image. The projection lens unit 35 magnifies the incident image since the screen 50 is positioned beyond the focal point of the projection lens unit 35. Accordingly, the image emitted from the CRT 31 is reversed as a result of passing through the projection lens unit 35. The projection lens unit 35 may be configured to have a predetermined focal length, for example, a focal length of 68.06 mm, which may be determined according to the overall size of the housing 30.

The reflection optical system 40 includes at least two reflecting mirrors and is arranged to guide the magnified image projected by the projection lens unit 35 so that the image is displayed on the screen 50. The reflection optical system 40 also reverses the image, thereby compensating for the reversal of the image by the projection lens unit 35. The reflection optical system 40 guides the magnified image to the screen 50 when the CRT 31 and the screen 50 are arranged such that the direction "a" along which the image is formed and the raster direction "b" are parallel or substantially parallel to each other.

In the embodiment depicted in Figures 4 and 5, the reflection optical system 40 includes a first reflecting mirror 41, which reflects an incident image, and a second reflecting mirror 45, which reflects the image reflected by the first reflecting mirror 41 onto the screen 50.

The first and second reflecting mirrors 41 and 45 may be arranged so that the second reflecting mirror 45 is disposed above the first reflecting mirror 41 and the first and second reflecting mirrors 41 and 45 are angled in opposite directions.

Figure 5 includes a definition of a Y-Z axis coordinate system. The Y-axis extends in the direction of the height of the rear projector, while the Z-axis extends along the direction of the thickness/depth of the rear projector. The first reflecting mirror 41 is arranged at an angle of $\theta_2$ to the Z-axis and the second reflecting mirror 45 is arranged at an angle of $\theta_3$ to the Z-axis. The angles $\theta_2$, and $\theta_3$ of the first and second reflecting mirrors 41 and 45 may satisfy the following Equation 1.

$$\theta_2 + \theta_3 - \frac{\theta_1}{2} \; \simeq \; 90 \; [\text{Deg.}] \qquad \cdots \; (1)$$

Since the first reflecting mirror 41 is relatively close to the projection lens unit 35, when compared with the second reflecting mirror 45, the first reflecting mirror 41 may be smaller than the second reflecting mirror 45. Accordingly, the CRT 31 and the projection lens unit 35 can be easily arranged in front of the first reflecting mirror 41.

The first and second reflecting mirrors 41 and 45 may be arranged so that the raster direction "b" of the CRT 31 and the direction "a" along which the image is formed on the screen 50 are the same or substantially the same. Furthermore, since the CRT 31 and the projection lens unit 35 can be positioned under the space between the screen 50 and the second reflecting mirror 45, the thickness or, in other words, the depth of the housing 30 can be reduced in comparison to the thickness of the conventional rear projector illustrated in Figure 3. The height of the housing 30 can also be reduced in comparison to that of the conventional rear projector illustrated in Figures 1 and 2.

**EP 1 646 231 A1**

While the reflection optical system 40 of Figures 4 and 5 includes the first and second reflecting mirrors 41 and 45, in other embodiments of the invention, the reflection optical system can include more than two reflecting mirrors.

As described above, a rear projector according to the invention can emit an image generated by a CRT 31 onto a screen 50 without image reversal by optimizing an optical arrangement of the CRT 31 and a reflection optical system 40. Moreover, the rear projector can be made slim and compact by reducing a height and a thickness of the cabinet 30.

Although a few embodiments of the present invention have been shown and described, it will be appreciated by those skilled in the art that changes may be made in these embodiments without departing from the scope of the invention, which is defined in the appended claims.

**Claims**

1. A rear projector, comprising:

   a cathode ray tube to scan light and generate an image;
   a projection lens unit to magnify and project the image generated by the cathode ray tube;
   a screen on which the projected image is formed; and
   a reflection optical system interposed between the projection lens unit and the screen to change a path of the magnified and projected image,

   wherein the cathode ray tube and the reflection optical system are arranged such that a raster direction of the cathode ray tube and a direction along which the image is formed on the screen are parallel or substantially parallel to each other.

2. The rear projector of claim 1, wherein when a raster of the cathode ray tube and the image formed on the screen are drawn at the same point, the raster direction of the cathode ray tube and the direction along which the image is formed on the screen form an angle of between 0 to 5°.

3. The rear projector of claim 2, wherein the reflection optical system comprises:

   a first reflecting mirror disposed at a first angle with respect to a first direction of the rear projector to face the projection lens unit and to reflect an incident image; and
   a second reflecting mirror disposed at a second angle with respect to the first direction of the rear projector and between the first reflecting mirror and the screen to reflect the image reflected by the first reflecting mirror to the screen.

4. The rear projector of claim 3, wherein the first reflecting mirror and the second reflecting mirror are angled in opposite directions with respect to the first direction of the rear projector.

5. The rear projector of claim 4, wherein the first direction of the rear projector corresponds with a depthwise direction of the rear projector.

6. The rear projector of claim 3, wherein the cathode ray tube and the projection lens unit are disposed under a space between the screen and the second reflecting mirror.

7. The rear projector of claim 1, wherein the reflection optical system comprises:

   a first reflecting mirror disposed at a first angle with respect to a first direction of the rear projector to face the projection lens unit to reflect an incident image; and
   a second reflecting mirror disposed at a second angle with respect to the first direction of the rear projector and between the first reflecting mirror and the screen to reflect the image reflected by the first reflecting mirror to the screen.

8. The rear projector of claim 7, wherein the first reflecting mirror and the second reflecting mirror are angled in opposite directions with respect to the first direction of the rear projector.

9. The rear projector of claim 7, wherein the cathode ray tube and the projection lens unit are disposed under a space

4

between the screen and the second reflecting mirror.

**10.** The rear projector of claim 7, wherein the second reflecting mirror is disposed above the first reflecting mirror.

**11.** The rear projector of claim 7, wherein the first reflecting mirror is smaller than the second reflecting mirror and is positioned closer to the cathode ray tube than the second reflecting mirror.

**12.** The rear projector of claim 1, wherein the projection lens unit reverses the image generated by the cathode ray tube.

**13.** The rear projector of claim 12, wherein the reflection optical system reverses the image projected by the projection lens unit.

**14.** The rear projector of claim 1, wherein the screen is positioned outside a focal length of the projection lens unit.

**15.** The rear projector of claim 1, wherein the reflection optical system comprises more than two reflecting mirrors.

**16.** A rear projector, comprising:

a housing;
a screen disposed at a front surface of the housing;
an image generator disposed adjacent to a bottom of the screen near the front surface of the housing;
a projection lens unit disposed adjacent to the image generator to magnify and to project the generated image toward a rear surface of the housing; and
a reflection unit disposed at the rear surface of the housing to reflect the projected image onto the screen.

**17.** The rear projector of claim 16, wherein the image generator comprises a cathode ray tube having a raster direction that is parallel to a direction along which the reflected image is formed on the screen.

**18.** The rear projector of claim 16, wherein the reflection unit comprises:

a first reflector disposed adjacent to the projection lens unit angled toward a top surface of the housing; and
a second reflector disposed at the rear surface of the housing angled toward a bottom surface of the housing and having a larger size than the first reflector.

**19.** The rear projector of claim 16, wherein the image generator is positioned in the housing above a level of a bottom edge of the screen.

**20.** A rear projector, comprising:

a housing;
a screen disposed at a front surface of the housing;
an image generator disposed within the housing to create and project an image; and
a reflection unit disposed near a rear surface of the housing to reflect the projected image onto the screen such that an image with scan lines having a raster direction at a predetermined angle is reflected onto the screen along which the image is formed at a direction substantially parallel to the raster direction.

**21.** A projector to form an image on a screen from a rear side thereof, comprising:

a cathode ray tube dispose adjacent to the screen to scan an image away from the rear side of the screen at an angle $\theta_1$ with respect to a height axis of the projector;
a projection unit to receive the image from the cathode ray tube, to magnify the image, and to project the image away from the cathode ray tube toward a rear of the projector;
a first reflector disposed at an angle $\theta_2$ with respect to a depth axis of the projector to receive the projected image and to reflect the image along the height axis of the projector; and
a second reflector disposed adjacent to the first reflector and at an angle $\theta_3$ with respect to the depth axis of the projector to reflect the projected image on the rear side of the screen, wherein the angle $\theta_1$, angle $\theta_2$, and angle $\theta_3$ are defined by: $\theta_2, + \theta_3 - \theta_1/2 = 90$ degrees.

# FIG. 1 (PRIOR ART)

# FIG. 2 (PRIOR ART)

# FIG. 3 (PRIOR ART)

# FIG. 4

# FIG. 5

**European Patent Office**

**EUROPEAN SEARCH REPORT**

Application Number

EP 05 10 8974

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 223 869 A (YANAGI ET AL) 29 June 1993 (1993-06-29) * column 5, line 26 - column 6, line 65; figure 2B * | 16,18,19 | H04N5/74 G03B21/10 |
| Y | | 15 | |
| X | EP 0 939 333 A (SANYO ELECTRIC CO., LTD) 1 September 1999 (1999-09-01) * column 1, lines 14-28; figure 19 * | 20 | |
| X | US 6 059 412 A (SUGITA ET AL) 9 May 2000 (2000-05-09) * column 1, line 10 - column 3, line 3; figures 1,10 * | 1-14,16, 19,20 | |
| Y | | 1-14,21 | |
| X | EP 1 205 791 A (SANYO ELECTRIC CORPORATION LIMITED) 15 May 2002 (2002-05-15) * paragraphs [0029] - [0068]; figure 1 * | 16,18-20 | |
| Y | | 15 | TECHNICAL FIELDS SEARCHED (IPC) |
| X | US 5 829 855 A (UCHIYAMA ET AL) 3 November 1998 (1998-11-03) * column 4, line 40 - column 6, line 61 * | 16,18-20 | H04N G03B |
| Y | | 1-14,21 | |
| X | EP 0 598 426 A (KONINKLIJKE PHILIPS ELECTRONICS N.V) 25 May 1994 (1994-05-25) * column 3, line 26 - column 4, line 52 * | 16,18,19 | |
| A | US 3 472 588 A (LESTER A. DINE ET AL) 14 October 1969 (1969-10-14) * the whole document * | 1-21 | |

The present search report has been drawn up for all claims

| Place of search | Date of completion of the search | Examiner |
|---|---|---|
| Munich | 26 January 2006 | Piedrafita, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 646 231 A1

**ANNEX TO THE EUROPEAN SEARCH REPORT
ON EUROPEAN PATENT APPLICATION NO.**

EP 05 10 8974

This annex lists the patent family members relating to the patent documents cited in the above-mentioned European search report.
The members are as contained in the European Patent Office EDP file on
The European Patent Office is in no way liable for these particulars which are merely given for the purpose of information.

26-01-2006

| Patent document cited in search report | | Publication date | Patent family member(s) | | Publication date |
|---|---|---|---|---|---|
| US 5223869 | A | 29-06-1993 | JP | 3241983 A | 29-10-1991 |
| EP 0939333 | A | 01-09-1999 | WO | 9819213 A1 | 07-05-1998 |
| US 6059412 | A | 09-05-2000 | JP | 10319501 A | 04-12-1998 |
| EP 1205791 | A | 15-05-2002 | CA | 2381093 A1 | 15-02-2001 |
| | | | CN | 1377476 A | 30-10-2002 |
| | | | WO | 0111425 A1 | 15-02-2001 |
| | | | TW | 436662 B | 28-05-2001 |
| | | | US | 6752500 B1 | 22-06-2004 |
| US 5829855 | A | 03-11-1998 | NONE | | |
| EP 0598426 | A | 25-05-1994 | JP | 6205347 A | 22-07-1994 |
| | | | US | 5289287 A | 22-02-1994 |
| US 3472588 | A | 14-10-1969 | NONE | | |

EPO FORM P0459

For more details about this annex : see Official Journal of the European Patent Office, No. 12/82